# EUROPÄISCHE PATENTSCHRIFT

(11) **EP 3 755 159 B1**
(45) Veröffentlichungstag und Bekanntmachung des Hinweises auf die Patenterteilung: **03.11.2021**
(21) Anmeldenummer: 18721937.3
(22) Anmeldetag: 20.04.2018
(51) Int. Cl.: A23G 9/04, A23G 9/22, F25C 5/04

(54) **VORRICHTUNG UND VERFAHREN ZUM ZERKLEINERN VON IN BLOCKFORM BEREITGESTELLTEN TIEFGEFRORENEN LEBENSMITTELN**
DEVICE AND METHOD FOR CRUSHING DEEP-FROZEN FOODSTUFFS PROVIDED IN BLOCK FORM
DISPOSITIF ET PROCÉDÉ DE BROYAGE D'ALIMENTS CONGELÉS SOUS FORME DE BLOCS

(43) Veröffentlichungstag der Anmeldung: 30.12.2020
(73) Patentinhaber: Pacotrade AG, 6300 Zug (CH)
(72) Erfinder: MANZ, Roland, 4614 Hägendorf (CH)
(74) Vertreter: Münch, Martin Walter
(86) Internationale Anmeldenummer: PCT/CH2018/000016
(87) Internationale Veröffentlichungsnummer: WO 2019/200490

(56) Entgegenhaltungen:
- EP-A2- 0 062 805
- WO-A1-97/36498
- ES-U- 1 071 424

## Beschreibung

### Technisches Gebiet

Die Erfindung betrifft eine Vorrichtung zum Zerkleinern, insbesondere Pürieren oder Pacossieren, von in Blockform bereitgestellten tiefgefrorenen Lebensmitteln sowie ein Verfahren zum Betrieb einer solchen Vorrichtung gemäss den Oberbegriffen der unabhängigen Patentansprüche.

### Stand der Technik

Gattungsgemässe Vorrichtungen zum Zerkleinern von in Blockform bereitgestellten tiefgefrorenen Lebensmitteln dienen der Erzeugung von creme- oder schaumartigen Lebensmittelzubereitungen, wie z.B. Moussen, Farcen, Geschmackskonzentraten, Pasten, Saucen, Suppen, Eis oder Sorbets, und sind heute aus der Profi-Gastronomie nicht mehr wegzudenken.

Die Anfänge derartiger Vorrichtungen gehen zurück auf den Schweizer Ingenieur Wilhelm Maurer, welcher in den 1980er Jahren auf der Suche nach der ultimativen Eiscreme-Maschine einen neuen Verarbeitungsprozess für tiefgefrorene Lebensmittel erfand, bei dem von einem Block aus auf -22 °C tiefgefrorenen Lebensmittels feinste Schichten abgeschabt werden, ohne dass ein Auftauen des abgeschabten Materials erfolgt. Dieser Prozess wird heute in Anlehnung an das zu seiner Ausführung speziell entwickelte kommerzielle Produkt "Pacojet" der Schweizer Firma Pacojet AG, Zug, auch als "Pacossieren" bezeichnet wird.

EP 0 062 805 A2 zeigt die ursprüngliche Ausführung der von Wilhelm Maurer entwickelten Softeis-Maschine, bei welcher von einer blockförmig gefrorene Eis-Ausgangsmasse mittels eines rotierenden Messers feine Schichten abgeschabt, geschlagen und mit unter Überdruck stehender Luft vermischt werden. Diese Softeis-Maschine weist einen einzigen Antriebsmotor auf, welcher sowohl dem Rotationsantrieb des Messers als auch dessen Vorschub dient. Hierzu ist die das Messer tragende Messerwelle axial verschiebbar gelagert und zentral von einer axial fix gelagerten Gewindespindel durchsetzt. Die Messerwelle und die Gewindespindel sind über das Gewinde der Gewindespindel derartig miteinander gekoppelt, dass eine Verdrehung der Gewindespindel relativ zu der Messerwelle eine axiale Verschiebung der Messerwelle bewirkt. Im Betrieb wird die Messerwelle direkt von dem Motor angetrieben, während die Gewindespindel über ein Schaltgetriebe von dem Motor angetrieben wird, so dass sie mit unterschiedlichen Drehzahlen angetrieben werden kann, zur Erzeugung einer Axialbewegung der Messerwelle. Diese gattungsgemässe Vorrichtung weist jedoch den Nachteil auf, dass der Messervorschub nur in wenigen festen, jeweils mit der Messerdrehzahl synchronen Stufen veränderbar ist, was die Gestaltungsmöglichkeiten des Pacossier-Prozesses stark einschränkt. Zudem sind die verwendeten Schaltgetriebe kosten- und wartungsintensiv, und sie ermöglichen üblicherweise nur schlagartige Drehzahlwechsel, was zu hohen Bauteilbelastungen führt.

Aus WO 97/36498 A1 ist ein Gerät zur Herstellung von Lebensmitteln in mousseartiger Konsistenz bekannt, welches die zuvor genannten Nachteile der aus EP 0 062 805 A2 bekannten Softeis-Maschine vermeidet. Dieses Gerät weist einen ganz ähnlichen Aufbau auf wie letztgenannte Softeis-Maschine, verzichtet jedoch auf das Schaltgetriebe und verwendet stattdessen für die Erzeugung einer Vorschubbewegung der Messerwelle einen mit der Messerwelle mitrotierenden Schrittmotor, dessen Motorenwelle die Gewindespindel bildet. Während bei diesem Gerät nun ein Messervorschub unabhängig und asynchron von der Drehzahl der Messerwelle möglich ist, ergibt sich hier jedoch der Nachteil, dass die elektrische Ansteuerung des Schrittmotors, welcher mit der Messerwelle mitrotiert, über Schleifkontakte erfolgen muss, was aufwendig und wartungsintensiv ist. Auch ergibt sich bei dieser Bauweise der Nachteil, dass zum Vor- und Zurückfahren der Messerwelle eine Drehrichtungsumkehr des Schrittmotors erforderlich ist, was zu erhöhten Bauteilbelastungen und zu einem ruckartigen Betrieb führen kann, insbesondere bei einem Mehrfach-Pacossierbetrieb, bei welchem die Messerwelle intermittierend vor- und zurückgefahren wird.

Aus ES 1 071 424 U ist eine Vorrichtung zur Erzeugung eines creme- oder schaumartigen Lebensmittels aus einem in Blockform vorliegenden Lebensmittel-Ausgangsmaterial bekannt, bei welchem die Messerspindel von einem ersten Motor angetrieben und von einem Joch getragen wird, welches entlang von zwei parallelen Gewindespindeln mit einem zweiten Motor vor und zurück gefahren werden kann. Auch bei dieser Vorrichtung ist, im Gegensatz zu der in EP 0 062 805 A2 gezeigten Softeis-Maschine, ein Messervorschub unabhängig und asynchron von der Drehzahl der Messerwelle möglich, jedoch ergibt sich hier der Nachteil, dass die Konstruktion mit dem verfahrbaren Joch aufwendig, strukturell labil und verschleissintensiv. ist, ganz abgesehen davon, dass sie relativ viel Bauraum benötigt. Auch ergibt sich bei dieser Bauweise ebenfalls der Nachteil, dass zum Vor- und Zurückfahren der Messerwelle eine Drehrichtungsumkehr des Antriebsmotors für die Gewindespindeln erforderlich ist, was auch hier zu hohen Bauteilbelastungen und zu einem ruckartigen Betrieb führen kann, insbesondere bei einem Mehrfach-Pacossierbetrieb, bei welchem die Messerwelle intermittierend vor- und zurückgefahren wird.

### Darstellung der Erfindung

Es stellt sich daher die Aufgabe, technische Lösungen zur Verfügung zu stellen, welche die zuvor genannten Nachteile des Standes der Technik nicht aufweisen oder diese zumindest teilweise vermeiden.

Diese Aufgabe wird durch die Gegenstände der unabhängigen Patentansprüche gelöst.

Gemäss diesen betrifft ein erster Aspekt der Erfindung eine Vorrichtung zum Zerkleinern, wie z.B. Pürieren oder Pacossieren, von in Blockform bereitgestellten tiefgefrorenen Lebensmitteln. Die Vorrichtung umfasst eine Zerkleinerungs-Einrichtung mit einem ein- oder mehrschneidigen Werkzeug zum Zerkleinern zumindest eines Teils des tiefgefrorenen Lebensmittelblocks. Hierzu wird im bestimmungsmässen. Betrieb der Vorrichtung das Werkzeug der Zerkleinerungs-Einrichtung um eine bevorzugterweise vertikale Rotationsachse herum rotiert und dabei entlang der Rotationsachse in Richtung auf den Lebensmittelblock zu vorgeschoben, so dass es unter einem Abschaben von Lebensmittelschichten von dem Lebensmittelblock in diesen eindringt. Das Werkzeug wird dabei bevorzugterweise mit einer Drehzahl zwischen 1000 U/min und 3000 U/min rotiert, die Vorschubgeschwindigkeit beträgt dabei bevorzugterweise zwischen 0.5 mm und 5 mm pro Sekunde.

Die Zerkleinerungs-Einrichtung weist zwei separat ansteuerbare Antriebsmotoren auf, bevorzugterweise Elektromotoren, welche der Erzeugung der Rotationsbewegung und der Vorschubbewegung des Werkzeugs dienen. Zumindest einer dieser beiden Motoren ist drehzahlvariabel, d.h. kann zumindest in einem bestimmten Drehzahlbereich stufenlos in der Drehzahl verändert werden.

Weiter umfasst die Zerkleinerungs-Einrichtung eine das Werkzeug tragende mechanische Getriebeanordnung, welche mit den beiden Antriebsmotoren gekoppelt ist und im bestimmungsgemässen Betrieb aus den Antriebsrotationen dieser beiden Motoren sowohl die Rotationsbewegung als auch die axiale Verschiebebewegung des Werkzeugs erzeugt. Dabei dient lediglich einer der beiden Antriebsmotoren dem Rotationsantrieb des Werkzeugs, während beide Antriebsmotoren gemeinsam dem Werkzeugvorschub dienen. Hierzu ist die Getriebeanordnung derartig ausgebildet, dass bei vorgegebenen Drehrichtungen der beiden Antriebsmotoren und einem bestimmten Verhältnis der Drehzahlen der beiden Antriebsmotoren das Werkzeug mit der Getriebeanordnung rotiert wird, ohne dass es axial entlang der Rotationsachse verschoben wird, und dass bei einer Überschreitung bzw. Unterschreitung dieses Drehzahlverhältnisses das Werkzeug nicht nur rotiert wird, sondern zusätzlich entlang der Rotationsachse vorgeschoben oder zurückgezogen wird, und zwar mit zunehmender Über- bzw. Unterschreitung des Drehzahlverhältnisses mit einer zunehmenden Geschwindigkeit.

Bei axial unbewegtem aber rotierendem Werkzeug drehen also beiden Antriebsmotoren mit einem bestimmten (neutralen) Drehzahlenverhältnis, und das Vorschieben und Zurückziehen des Werkzeugs erfolgt durch eine stufenlose Veränderung dieses Drehzahlverhältnisses in die eine oder andere Richtung infolge einer Drehzahländerung des mindestens einen drehzahlvariablen Antriebsmotors und ohne dass es zu einer Drehrichtungsumkehr eines der Antriebsmotoren kommt.

Mit anderen Worten gesagt betrifft der erste Aspekt der Erfindung also eine Vorrichtung zum Zerkleinern von in Blockform bereitgestellten gefrorenen Lebensmitteln, welche eine Zerkleinerungs-Einrichtung mit einem Werkzeug umfasst, das um eine Rotationsachse herum rotiert wird und dabei auf den Lebensmittelblock zu geschoben wird, unter einem Abschaben von Lebensmittel-Schichten von dem Block. Die Zerkleinerungs-Einrichtung weist zwei Antriebsmotoren für die Erzeugung der Rotations- und der Vorschubbewegung des Werkzeugs auf, welche separat ansteuerbar sind und von denen mindestens einer drehzahlvariabel ist. Auch umfasst sie eine Getriebeanordnung, welche mit den beiden Antriebsmotoren gekoppelt ist und derartig ausgebildet ist, dass lediglich ein erster der Antriebsmotoren dem Rotationsantrieb des Werkzeugs dient und dass beide Antriebsmotoren gemeinsam dem Werkzeugvorschub dienen, derart, dass bei einem bestimmten Drehzahlverhältnis der beiden Antriebsmotoren das Werkzeug rotiert wird, ohne eine Axialbewegung zu vollführen, und bei einer Überschreitung bzw. Unterschreitung dieses Drehzahlverhältnisses zusätzlich zur Rotationsbewegung eine Vorschub- bzw. Rückzugbewegung des Werkzeugs entlang der Rotationsachse resultiert.

Mit der erfindungsgemässen Vorrichtung sind sehr schnelle aber zugleich belastungsarme Vorschubrichtungsänderungen möglich, und das bei. einer sehr feinfühligen Kontrollierbarkeit der Vorschubgeschwindigkeiten.

In einer bevorzugten Ausführungsform der erfindungsgemässen Vorrichtung umfasst die Getriebeanordnung der Zerkleinerungs-Einrichtung eine das Werkzeug tragende rotierbare Welle, welche axial verschiebbar gelagert ist und mit dem ersten Antriebsmotor rotierbar ist, sowie ein konzentrisch zu dieser Welle angeordnetes rotierbares Vorschuborgan, welches axial fix gelagert und mit dem zweiten Antriebsmotor rotierbar ist. Die Welle und das Vorschuborgan sind über ein Gewinde derartig miteinander gekoppelt, dass eine Verdrehung des Vorschuborgans relativ zu der Welle eine axiale Verschiebung der Welle gegenüber dem Vorschuborgan bewirkt, und damit eine axiale Verschiebung des Werkzeugs entlang von dessen Rotationsachse. Eine derartige Konstruktionsweise ermöglicht relative einfach aufgebaute, robuste Lösungen, welche zudem einen geringen Platzbedarf aufweisen.

In einer ersten bevorzugten Ausführungsvariante ist die Welle als Hohlwelle ausgebildet, und das Vorschuborgan eine konzentrisch darin angeordnete Gewindespindel, deren Aussengewinde in ein entsprechendes Innengewinde in der Hohlwelle eingreift.

In einer zweiten bevorzugten Ausführungsvariante ist die Welle als zentrale Gewindespindel ausgebildet, und das Vorschuborgan als eine auf dieser Gewindespindel angeordnete und in deren Gewinde eingreifende Vorschubmutter.

In einer dritten bevorzugten Ausführungsvariante ist das Vorschuborgan als Hohlwelle mit Innengewinde ausgebildet, innerhalb welcher die Welle angeordnet ist und mit einem daran gebildeten entsprechenden Aussengewinde in das Innengewinde der Hohlwelle eingreift.

Je nach konstruktiver Ausbildung der erfindungsgemässen Vorrichtung kann die eine oder die andere Ausführungsvariante bevorzugter sein.

Mit Vorteil ist der erste Motor über einen Zahnriemen (anspruchsgemässer erster Zahnriemen) mit der das Werkzeug tragenden Welle der Getriebeanordnung gekoppelt, und der zweite Motor ebenfalls über einen Zahnriemen (anspruchsgemässer zweiter Zahnriemen) mit dem Vorschuborgan. Derartige Riementriebe sind kostengünstig, leise und verschleissarm, und sie ermöglichen eine schlupffreie Ankopplung zwischen Antriebsmotor und angetriebenem Element.

Das Vorschuborgan, gegen welches sich die das Werkzeug tragende Welle axial abstützt, ist bevorzugterweise derartig gelagert, dass es sich bei axialer Überlast entgegen den Kräften einer Feder in axialer Richtung wegzeigend vom Werkzeug verschieben kann. Auf diese Weise kann ein fataler "Crash" bei axialer Überlastung in gewissen Grenzen verhindert werden.

Dabei ist es bei Ausführungsformen, bei denen der zweite Motor über einen Zahnriemen mit dem Vorschuborgan gekoppelt ist, bevorzugt, dass der maximal mögliche axiale Verschiebeweg des Vorschuborgans bei Überlast mindestens zwei Dritteln der Breite des zweiten Zahnriemens entspricht. Hierdurch wird es möglich, auf einfache Weise eine automatische Riemenabwurf-Funktion zu realisieren, welche insbesondere auch dann wichtig ist, wenn es zu einem Bruch des Zahnriemens zwischen dem ersten Antriebsmotor und der das Werkzeug tragenden Welle kommt, da es in diesem Fall passieren kann, dass letztgenannte Welle nicht mehr rotiert aber sehr schnell vorgeschoben wird, was dann zu einer rasch zunehmenden axialen Überlast führt.

Eine solche Riemenabwurf-Funktion kann auf verschiedene Arten realisiert werden:
In einer ersten bevorzugten Ausführungsvariante weist das Riemenrad am Vorschuborgan auf der dem Vorschuborgan zugewandten Seite eine zu dieser Seite hin offene Verzahnung auf. Oberhalb des Zahnriemens, welcher das Vorschuborgan mit dem zweiten Antriebsmotor verbindet, ist eine Abstreifvorrichtung vorhanden, z.B. ein Abstreifbügel, welcher diesen Zahnriemen bei einem axialen Verschieben des Vorschuborgans bei axialer Überlast zurückhält und dabei in Richtung zum Vorschuborgan hin vom Riemenrad am Vorschuborgan abstreift.

In einer zweiten bevorzugten Ausführungsvariante weist das Riemenrad am Vorschuborgan auf der dem Vorschuborgan zugewandten Seite eine Anlaufschulter für den Zahnriemen auf, während das Riemenrad am zweiten Antriebsmotor auf der entgegen gesetzten Seite eine zu dieser Seite offene Verzahnung aufweist, so dass der Zahnriemen bei einem axialen Verschieben des Vorschuborgans bei axialer Überlast vom Riemenrad am zweiten Antriebsmotor ablaufen kann.

In noch einer weiteren bevorzugten Ausführungsform weist die erfindungsgemässe Vorrichtung ein Gefäss auf, mit welchem im bestimmungsgemässen Betrieb die tiefgefrorenen Lebensmittel als in dem Gefäss eingefrorener Lebensmittelblock bereitgestellt werden und in welchem im bestimmungsgemässen Betrieb das Zerkleinern, z.B. Pürieren oder Pacossieren, zumindest eines Teils des tiefgefrorenen Lebensmittelblocks mit der Zerkleinerungs-Einrichtung erfolgt. Derartige Vorrichtungen haben sich als besonders praxistauglich erwiesen.

Dabei ist die Vorrichtung bevorzugterweise zudem derartig ausgestaltet, dass das Gefäss während dem Zerkleinern der tiefgefrorenen Lebensmittel mit einem Gas, z.B. mit Luft, unter einen Überdruck gesetzt werden kann, insbesondere unter einen Überdruck von mindestens 1 bar. Hierdurch kann eine luftigere Konsistenz der zerkleinerten Lebensmittelzubereitung erreicht werden.

Weiter ist es bevorzugt, dass die beiden Antriebsmotoren feststehend gegenüber einer Tragstruktur der Vorrichtung sind. Auf diese Weise entfallen aufwendige und verschleissintensive Energieübertragungs- und Signalleitungen von stehenden Bauteilen auf rotierende Bauteile.

Ein zweiter Aspekt der Erfindung betrifft ein Verfahren zum Betrieb der Vorrichtung gemäss dem ersten Aspekt der Erfindung, bei welchem die Drehzahl des mindestens einen drehzahlvariablen Antriebsmotors im bestimmungsgemässen Betrieb stufenlos variiert wird, so dass eine intermittierende Vorwärts- und Rückwärtsbewegung des Werkzeugs entlang der Rotationsachse resultiert. Bei einem derartigen Betrieb, der insbesondere beim Mehrfach-Pacossieren zum Einsatz kommen kann, treten die Vorteile der Erfindung besonders deutlich zu Tage.

### Kurze Beschreibung der Zeichnungen

Weitere Vorteile und Anwendungen der Erfindung ergeben sich aus der nun folgenden Beschreibung anhand der Figuren. Dabei zeigen:
Fig. 1 eine teilweise geschnittene, perspektivische Darstellung der Zerkleinerungs-Einrichtung einer erfindungsgemässen Vorrichtung; und
Fig. 2 eine vergrösserte Seitenansicht des Riementriebs zwischen dem zweiten Antriebsmotor und dem Vorschuborgan der Zerkleinerungs-Einrichtung aus Fig. 1.

### Wege zur Ausführung der Erfindung

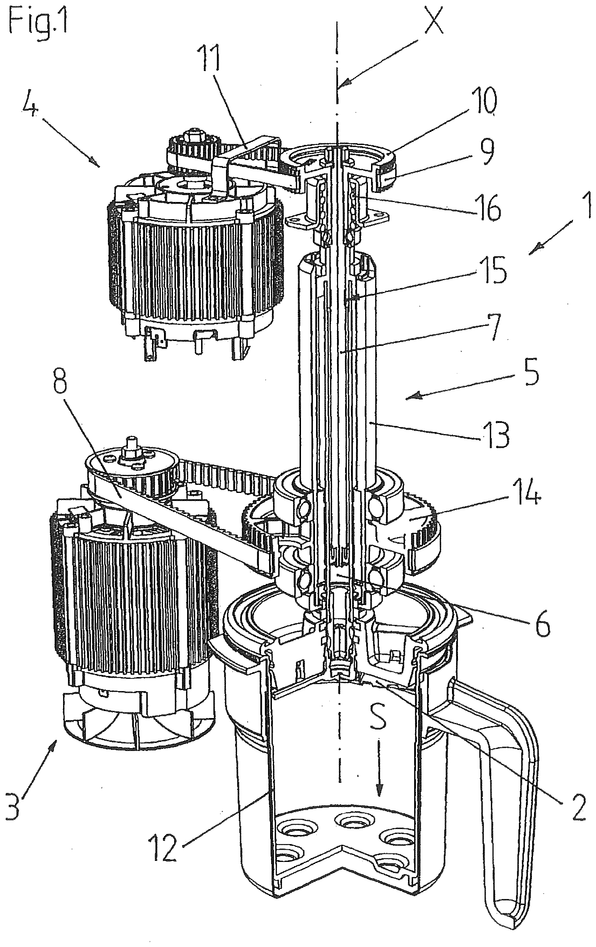

Fig. 1 zeigt eine teilweise geschnittene, perspektivische Darstellung der Zerkleinerungs-Einrichtung 1 einer erfindungsgemässen Vorrichtung, zusammen mit einem in bestimmungsgemässer Position daran angeordneten Gefäss 12, mit welchem im bestimmungsgemässen Betrieb die tiefgefrorenen Lebensmittel als ein in dem Gefäss 12 eingefrorener Lebensmittelblock bereitgestellt werden und in welchem im bestimmungsgemässen Betrieb das Zerkleinern, insbesondere Pürieren oder Pacossieren, zumindest eines Teils des tiefgefrorenen Lebensmittelblocks mit der Zerkleinerungs-Einrichtung 1 erfolgt.

Bei dieser Vorrichtung erfolgt das Zerkleinern der in Blockform bereitgestellten tiefgefrorenen Lebensmitteln (nicht dargestellt) dadurch, dass das mehrflügelige Messer 2 (anspruchsgemässes Werkzeug) um eine vertikale Rotationsachse X herum rotiert wird und dabei entlang dieser Rotationsachse X in Richtung S auf den Lebensmittelblock zu vorgeschoben wird, wobei es feine Schichten von dem gefrorenen Lebensmittelblock abschabt.

Wie zu erkennen ist, weist die Zerkleinerungs-Einrichtung 1 für die Erzeugung der Rotationsbewegung und der Vorschubbewegung des Messers 2 einen ersten elektrischen Antriebsmotor 3 und einen zweiten elektrischen Antriebsmotor 4 auf. Beide Motoren 3, 4 sind separat ansteuerbar, drehzahlvariabel und an einer feststehenden Tragstruktur der Vorrichtung (nicht gezeigt) befestigt. Weiter umfasst die Zerkleinerungs-Einrichtung 1 eine Getriebeanordnung 5, welche mit den beiden Antriebsmotoren 3, 4 gekoppelt ist und derartig ausgebildet ist, dass lediglich der erste Antriebsmotor 3 dem Rotationsantrieb des Messers 2 dient und dass beide Antriebsmotoren 3, 4 gemeinsam dem Messervorschub dienen.

Hierzu weist die Getriebeanordnung 5 eine das Messer 2 tragende rotierbare Hohlwelle 6 auf, welche axial verschiebbar gelagert.

Diese Hohlwelle 6 ist konzentrisch und axial verschieblich in einer axial feststehend rotierbar gelagerten längsverzahnten Antriebshülse 13 angeordnet, mit deren Längsverzahnung sie einen rotatorischen Formschluss bildet, so dass die Hohlwelle 6 über die Antriebshülse 13 mit dem ersten Antriebsmotor 3 um die Rotationsachse X herumrotierbar ist. Hierzu weist die Antriebshülse 13 an ihrem Aussenumfang ein Riemenrad 14 auf, welches über einen Zahnriemen 8 mit dem ersten Antriebsmotor 3 angetrieben werden kann.

Konzentrisch in der Hohlwelle 6 angeordnet ist eine axial feststehend gelagerte Gewindespindel 7, welche mit dem zweiten Antriebsmotor 4 um die Rotationsachse X herum rotierbar ist. Hierzu weist die Gewindespindel 7 an ihrem freien Ende ein Riemenrad 10 auf, welches über einen Zahnriemen 9 mit dem zweiten Antriebsmotor 4 angetrieben werden kann.

Die Hohlwelle 6 weist eine Innengewinde-Abschnitt 15 auf, welcher in das Aussengewinde der Gewindespindel 7 eingreift. Hierdurch sind die Hohlwelle 6 und die Gewindespindel 7 derartig miteinander gekoppelt, dass eine Verdrehung der Gewindespindel 7 relativ zu der Hohlwelle 6 eine axiale Verschiebung der Hohlwelle 6 gegenüber der axial feststehenden Gewindespindel 7 bewirkt. Mit anderen Worten gesagt bewirkt also eine Drehzahldifferenz zwischen der Hohlwelle 6 und der Gewindespindel 7 ein Absenken oder Anheben der Hohlwelle 6 entlang der Rotationsachse X und damit ein Vorschieben bzw. Zurückziehen des Messers 2 bezüglich des zu zerkleinernden Lebensmittelblocks. Bei identischen Drehzahlen von Hohlwelle 6 und Gewindespindel 7 wird das Messer 2 rotiert, ohne dass es dabei eine Axialbewegung entlang der Rotationsachse X ausführt.

Mit anderen Worten gesagt wird bei vorgegebenen identischen Drehrichtungen der beiden Antriebsmotoren 3, 4 und einem bestimmten Verhältnis der Drehzahlen der beiden Antriebsmotoren 3, 4, bei welchem die Drehzahlen der Hohlwelle 6 und der Gewindespindel 7 identisch sind, das Messer 2 rotiert, ohne dass dieses eine Axialbewegung entlang der Rotationsachse X vollführt. Bei einer Überschreitung bzw. Unterschreitung dieses bestimmten Drehzahlverhältnisses erfolgt zusätzlich eine Vorschub- bzw. Rückzugbewegung des Messers 2 entlang der Rotationsachse X, welche mit zunehmender Über- bzw. Unterschreitung des Drehzahlverhältnisses in der Geschwindigkeit zunehmend ist.

Wie zu erkennen ist, ist die Gewindespindel 7 derartig gelagert, dass sie sich bei axialer Überlast entgegen den Kräften einer Feder 16 in axialer Richtung wegzeigend vom Messer 2 verschieben kann. Dabei entspricht der maximal mögliche axiale Verschiebeweg bei Überlast etwa dem Anderthalbfachen der Breite des Zahnriemens 9.

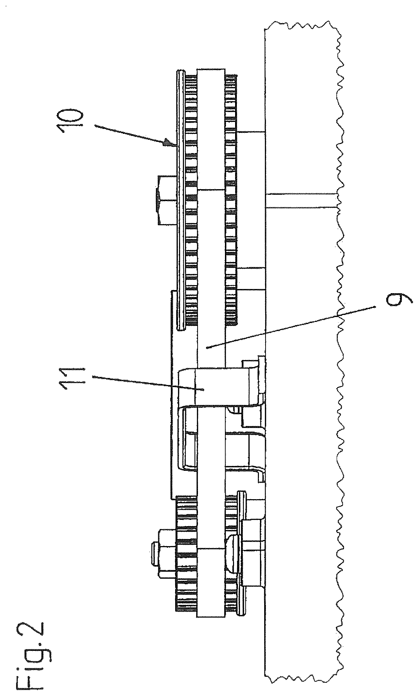

Wie insbesondere in Zusammenschau mit Fig. 2 erkennbar ist, welche eine vergrösserte Seitenansicht des Riementriebs zwischen dem zweiten Antriebsmotor 3 und der Gewindespindel 7 zeigt, weist das Riemenrad 10 der Gewindespindel 7 auf der dieser zugewandten Seite eine offene Verzahnung auf. Oberhalb des Zahnriemens 9 ist ein Abstreifbügel 11 vorhanden, welcher den Zahnriemen 9 bei einem axialen Verschieben der Gewindespindel 7 unter axialer Überlast nach oben, bei welchem auch das Riemenrad 10 nach oben wandert, zurückhält und dadurch vom Riemenrad 10 abstreift.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Vorrichtung zum Zerkleinern, insbesondere Pürieren oder Pacossieren, von in Blockform bereitgestellten tiefgefrorenen Lebensmitteln, umfassend eine Zerkleinerurigs-Einrichtung (1) mit einem Werkzeug (2) zum Zerkleinern zumindest eines Teils des tiefgefrorenen Lebensmittelblocks, indem das Werkzeug (2) um eine insbesondere vertikale Rotationsachse (X) herum rotiert wird und dabei entlang der Rotationsachse (X) in Richtung (S) auf den Lebensmittelblock zu vorgeschoben wird, unter einem Abschaben von Lebensmittelschichten von dem Lebensmittelblock,
wobei die Zerkleinerungs-Einrichtung (1) einen ersten Antriebsmotor (3) und einen zweiten Antriebsmotor (4) aufweist für die Erzeugung der Rotationsbewegung und der Vorschubbewegung des Werkzeugs (2), welche separat ansteuerbar sind und von denen mindestens einer drehzahlvariabel ist,
und wobei die Zerkleinerungs-Einrichtung (1) eine Getriebeanordnung (5) umfasst, welche mit den beiden Antriebsmotoren (3, 4) gekoppelt ist und derartig ausgebildet ist, dass lediglich der erste Antriebsmotor (3) dem Rotationsantrieb des Werkzeugs (2) dient und dass beide Antriebsmotoren (3, 4) gemeinsam dem Werkzeugvorschub dienen, derart,
dass bei vorgegebenen Drehrichtungen der beiden Antriebsmotoren (3, 4) und einem bestimmten Verhältnis der Drehzahlen der beiden Antriebsmotoren (3, 4) das Werkzeug (2) rotiert wird ohne dass dieses eine Axialbewegung entlang der Rotationsachse (X) vollführt
und dass bei einer Überschreitung bzw. Unterschreitung dieses Drehzahlverhältnisses eine Vorschub- bzw. Rückzugbewegung des Werkzeugs (2) entlang der Rotationsachse (X) erzeugt wird, welche mit zunehmender Über- bzw. Unterschreitung des Drehzahlverhältnisses in der Geschwindigkeit zunehmend ist.

2. Vorrichtung nach Anspruch 1, wobei die Getriebeanordnung (5) der Zerkleinerungs-Einrichtung (1) eine das Werkzeug (2) tragende rotierbare Welle (6) aufweist, welche axial verschiebbar gelagert und mit dem ersten Antriebsmotor (3) rotierbar ist, und ein konzentrisch zu dieser Welle angeordnetes rotierbares Vorschuborgan (7) aufweist, welches axial fix gelagert und mit dem zweiten Antriebsmotor (4) rotierbar ist,
wobei die Welle (6) und das Vorschuborgan (7) über ein Gewinde derartig miteinander gekoppelt sind, dass eine Verdrehung des Vorschuborgans (7) relativ zu der Welle (6) eine axiale Verschiebung der Welle (6) gegenüber dem Vorschuborgan (7) bewirkt.

3. Vorrichtung nach Anspruch 2, wobei die Welle (6) als Hohlwelle ausgebildet ist, und das Vorschuborgan (7) als konzentrisch darin angeordnete Gewindespindel.

4. Vorrichtung nach Anspruch 2, wobei die Welle als zentrale Gewindespindel ausgebildet ist, und das Vorschuborgan als eine auf dieser Gewindespindel angeordnete Vorschubmutter.

5. Vorrichtung nach Anspruch 2, wobei das Vorschuborgan als Hohlwelle mit Innengewinde ausgebildet ist, innerhalb welcher die Welle angeordnet ist.

6. Vorrichtung nach einem der Ansprüche 2 bis 5, wobei der erste Motor (3) über einen ersten Zahnriemen (8) mit der Welle (6) gekoppelt ist und der zweite Motor (4) über einen zweiten Zahnriemen (9) mit dem Vorschuborgan (7) gekoppelt ist.

7. Vorrichtung nach einem der Ansprüche 2 bis 6, wobei das Vorschuborgan (7) derartig gelagert ist, dass es sich bei axialer Überlast entgegen den Kräften einer Feder in axialer Richtung wegzeigend vom Werkzeug (2) verschieben kann.

8. Vorrichtung nach Anspruch 6 und nach Anspruch 7, wobei der maximal mögliche axiale Verschiebeweg des Vorschuborgans (7) bei Überlast mindestens zwei Dritteln der Breite des zweiten Zahnriemens (9) entspricht.

9. Vorrichtung nach Anspruch 8, wobei das Riemenrad (10) am Vorschuborgan (7) auf der dem Vorschuborgan (7) zugewandten Seite eine zu dieser Seite offene Verzahnung aufweist und oberhalb des zweiten Zahnriemens (9) eine Abstreifvorrichtung (11) vorhanden ist, insbesondere ein Abstreifbügel (11), welcher den zweiten Zahnriemen (9) bei einem axialen Verschieben des Vorschuborgans (7) bei Überlast in Richtung zum Vorschuborgan (7) hin vom Riemenrad (10) am Vorschuborgan abstreift.

10. Vorrichtung nach Anspruch 8, wobei das Riemenrad am Vorschuborgan auf der dem Vorschuborgan zugewandten Seite eine Anlaufschulter für den Zahnriemen aufweist und das Riemenrad am zweiten Antriebsmotor auf der dem Vorschuborgan abgewandten Seite eine zu dieser Seite offene Verzahnung aufweist, so dass der zweite Zahnriemen bei einem axialen Verschieben des Vorschuborgans bei Überlast über die dem Vorschuborgan abgewandte Seite vom Riemenrad am zweiten Antriebsmotor abläuft.

11. Vorrichtung nach einem der vorangehenden Ansprüche, wobei die Vorrichtung des Weiteren ein Gefäss (12) umfasst, mit welchem im bestimmungsgemässen Betrieb die tiefgefrorenen Lebensmittel als ein in dem Gefäss (12) eingefrorener Lebensmittelblock bereitgestellt werden und in welchem im bestimmungsgemässen Betrieb das Zerkleinern zumindest eines Teils des tiefgefrorenen Lebensmittelblocks mit der Zerkleinerungs-Einrichtung (1) erfolgt.

12. Vorrichtung nach Anspruch 11, wobei die Vorrichtung derartig ausgestaltet ist, dass das Gefäss (12) während dem Zerkleinern der tiefgefrorenen Lebensmittel mit einem Gas, insbesondere mit Luft, unter Überdruck gesetzt werden kann, insbesondere unter einen Überdruck von mindestens 1 bar.

13. Vorrichtung nach einem der vorangehenden Ansprüche, wobei die beiden Antriebsmotoren (3, 4) feststehend gegenüber einer Tragstruktur der Vorrichtung sind.

14. Verfahren zum Betrieb der Vorrichtung nach einem der vorangehenden Ansprüche, wobei die Drehzahl des mindestens einen drehzahlvariablen Antriebsmotors (3, 4) stufenlos derartig variiert wird, dass eine intermittierende Vorwärts- und Rückwärtsbewegung des Werkzeugs (2) entlang der Rotationsachse (X) resultiert.

## Claims

1. Device for shredding, in particular pureeing or pacotizing, of deep-frozen food products provided in block form, comprising a shredding device (1) with a tool (2) for shredding at least part of the deep-frozen food products block, by rotating the tool (2) around a particularly vertical axis of rotation (X) and thereby advancing it along the axis of rotation (X) in direction (S) towards the food products block, thereby scraping off food layers from the food products block,
wherein the shredding device (1) comprises a first drive motor (3) and a second drive motor (4) for generating the rotational movement and the feed movement of the tool (2), which drive motors are separately controllable and of which at least one is speed-variable,
and wherein the shredding device (1) comprises a gear arrangement (5) which is coupled to the two drive motors (3, 4) and which is designed in such a way that only the first drive motor (3) serves to drive the rotation of the tool (2) and that both drive motors (3, 4) together serve to advance the tool, in such a way
that at set directions of rotations of the two drive motors (3, 4) and at a specific ratio of the number of revolutions of the two drive motors (3, 4), the tool (2) is rotated without performing any axial movement along the axis of rotation X,
and that, if this specific rotational speed ratio is exceeded or undercut, respectively, an advancing or retracting movement of the tool (2) along the axis of rotation (X) is generated, which advancing or retracting movement increases in speed with an increasing exceeding or undercutting, respectively, of the rotational speed ratio.

2. Device according to claim 1, wherein the gear arrangement (5) of the shredding device (1) comprises a rotatable shaft (6) carrying the tool (2), which is supported in an axially displaceable manner and which is rotatable with the first drive motor (3), and a rotatable feed member (7) arranged concentrically to this shaft, which is supported in an axially stationary manner and which is rotatable with the second drive motor (4),
wherein the shaft (6) and the feed member (7) are coupled to each other by means of a thread in such a way that a rotation of the feed member (7) relative to the shaft (6) causes an axial displacement of the shaft (6) with respect to the feed member (7).

3. Device according to claim 2, wherein the shaft (6) is designed as a hollow shaft, and wherein the feed member (7) is designed as a concentric threaded spindle arranged therein.

4. Device according to claim 2, wherein the shaft is designed as a central threaded spindle and wherein the feed member is a feed nut arranged on this threaded spindle.

5. Device according to claim 2, wherein the feed member is designed as a hollow shaft with an internal thread, within which the shaft is arranged.

6. Device according to any one of the claims 2 to 5, wherein the first motor (3) is coupled to the shaft (6) via a first toothed belt (8) and wherein the second motor (4) is coupled to the feed member (7) via a second toothed belt (9).

7. Device according to any one of the claims 2 to 6, wherein the feed member (7) is supported in such a way that it can be displaced in the axial direction facing away from the tool (2) against the forces of a spring in the event of an axial overload.

8. Device according to claim 6 and according to claim 7, wherein the maximum possible axial displacement of the feed member (7) in the event of overload corresponds to at least two thirds of the width of the second toothed belt (9).

9. Device according to claim 8, wherein the belt wheel (10) on the feed member (7) comprises on the side facing the feed member (7) a toothing open to this side and wherein above the second toothed belt (9) a stripping device (11) is present, in particular a stripping bar (11), which strips the second toothed belt (9) off the belt wheel (10) on the feed member at an axial displacement of the feed member (7) in the direction towards the feed member (7) under overload.

10. Device according to claim 8, wherein the belt wheel on the feed member comprises a run-up shoulder for the toothed belt on the side facing the feed member and wherein the belt wheel on the second drive motor comprises on the side facing away from the feed member a toothing open towards this side, such that the second toothed belt runs off the belt wheel on the second drive motor at an axial displacement of the feed member under overload over the side facing away from the feed member.

11. Device according to any one of the preceding claims, wherein the device further comprises a container (12) with which, in the intended operation, the frozen food products are provided as a block of food products frozen in the container (12) and in which, in the intended operation, the shredding of at least a part of the deep-frozen food products block takes place by means of the shredding device (1).

12. Device according to claim 11, wherein the device is designed in such a way that the container (12) can be pressurized to an excess pressure with a gas, in particular with air, during the shredding of the deep-frozen food products, in particular to an excess pressure of at least 1 bar.

13. Device according to any one of the preceding claims, wherein the two drive motors (3, 4) are stationary with respect to a support structure of the device.

14. Method for operating the device according to any one of the preceding claims, wherein the number of revolutions of the at least one variable-speed drive motor (3, 4) is varied continuously in such a way that an intermittent forward and backward movement of the tool (2) along the axis of rotation (X) results.

## Revendications

1. Dispositif pour déchiqueter, en particulier pour réduire en purée ou en pacotille, des aliments surgelés se présentant sous forme de blocs, comprenant un dispositif de déchiquetage (1) avec un outil (2) pour déchiqueter au moins une partie du bloc d'aliments surgelés, en faisant tourner l'outil (2) autour d'un axe de rotation (X) particulièrement vertical tout en l'avançant le long de l'axe de rotation (X) dans la direction (S) vers le bloc alimentaire, raclant ainsi les couches d'aliments du bloc alimentaire,
dans lequel le dispositif de déchiquetage (1) comprend un premier moteur d'entraînement (3) et un second moteur d'entraînement (4) pour générer le mouvement de rotation et le mouvement d'avance de l'outil (2), qui peuvent être commandés séparément et dont au moins un est variable en vitesse,
et dans lequel le dispositif de déchiquetage (1) comprend un dispositif d'engrenage (5) qui est couplé aux deux moteurs d'entraînement (3, 4) et qui est conçu de telle sorte que seul le premier moteur d'entraînement (3) sert à entraîner la rotation de l'outil (2) et que les deux moteurs d'entraînement (3, 4) servent ensemble à faire avancer l'outil de telle sorte que,
pour des sens de rotation prédéterminés des deux moteurs d'entraînement (3, 4) et un certain rapport des vitesses de rotation des deux moteurs d'entraînement (3, 4), l'outil (2) est tourné sans qu'il fait un mouvement axiale le long de l'axe de rotation (X)
lorsque ce rapport de vitesses est dépassé ou sous-dépassé, un mouvement d'avance ou de retrait de l'outil (2) le long de l'axe de rotation (X) est généré, lequel mouvement augmente en vitesse à mesure que le rapport de vitesses est de plus en plus dépassé ou sous-dépassé.

2. Dispositif selon la revendication 1, dans lequel le dispositif d'engrenage (5) du dispositif de déchiquetage (1) présente un arbre rotatif (6) portant l'outil (2), qui est monté de manière à pouvoir être déplacé axialement et qui peut tourner avec le premier moteur d'entraînement (3), et présente un organe d'avance rotatif (7) disposé concentriquement à cet arbre, qui est monté de manière fixe axialement et qui peut tourner avec le deuxième moteur d'entraînement (4),
dans lequel l'arbre (6) et l'organe d'avance (7) sont couplés l'un à l'autre par un filetage de telle sorte qu'une rotation de l'organe d'avance (7) par rapport à l'arbre (6) provoque un déplacement axial de l'arbre (6) par rapport à l'organe d'avance (7).

3. Dispositif selon la revendication 2, dans lequel l'arbre (6) est formé comme un arbre creux et l'organe d'avance (7) est formé comme une broche filetée disposée concentriquement dans celui-ci.

4. Dispositif selon la revendication 2, dans lequel l'arbre est conçu comme une broche filetée centrale et l'organe d'avance comme un écrou de déplacement disposé sur cette broche filetée.

5. Dispositif selon la revendication 2, dans lequel l'organe d'avance est formé comme un arbre creux avec un filetage interne, à l'intérieur duquel l'arbre est disposé.

6. Dispositif selon l'une des revendications 2 à 5, dans lequel le premier moteur (3) est couplé à l'arbre (6) par l'intermédiaire d'une première courroie dentée (8) et le deuxième moteur (4) est couplé à l'organe d'avance (7) par l'intermédiaire d'une deuxième courroie dentée (9).

7. Dispositif selon l'une des revendications 2 à 6, dans lequel l'organe d'avance (7) est monté de telle sorte qu'en cas de surcharge axiale, il peut être déplacé dans la direction axiale à l'écart de l'outil (2) contre les forces d'un ressort.

8. Dispositif selon la revendication 6 et selon la revendication 7, dans lequel la trajectoire maximale possible de déplacement axial de l'organe d'avance (7) en surcharge correspond à au moins deux tiers de la largeur de la deuxième courroie dentée (9).

9. Dispositif selon la revendication 8, dans lequel la roue de courroie (10) sur l'organe d'avance (7) présente, sur le côté tourné vers l'organe d'avance (7), une denture ouverte vers ce côté, et un dispositif de raclage (11) est présent au-dessus de la deuxième courroie dentée (9), en particulier un support d'essuyage (11) qui essuie la deuxième courroie dentée (9) de la roue de courroie (10) sur l'organe d'avance en cas de déplacement axial de l'organe d'avance (7) en direction de l'organe d'avance (7) en cas de surcharge.

10. Dispositif selon la revendication 8, dans lequel la roue de courroie sur l'organe d'avance présente un épaulement de départ pour la courroie dentée sur le côté tourné vers l'organe d'avance et la roue de courroie sur le deuxième moteur d'entraînement présente une denture ouverte vers ce côté sur le côté opposé à l'organe d'avance, de sorte que la deuxième courroie dentée se détache de la roue de courroie sur le deuxième moteur d'entraînement par le côté opposé à l'organe d'avance en cas de déplacement axial de l'organe d'avance en cas de surcharge.

11. Dispositif selon l'une des revendications précédentes, dans lequel le dispositif comprend en outre un récipient (12) avec lequel, dans l'opération prévue, les aliments surgelés sont fournies sous la forme d'un bloc des aliments surgelés dans le récipient (12) et dans lequel, dans l'opération prévue, le déchiquetage d'au moins une partie du bloc des aliments surgelés a lieu avec le dispositif de déchiquetage (1).

12. Dispositif selon la revendication 11, le dispositif étant conçu de telle sorte que le récipient (12) puisse être mis sous pression avec un gaz, notamment de l'air, pendant le déchiquetage des aliments surgelés, notamment sous une surpression d'au moins 1 bar.

13. Dispositif selon l'une des revendications précédentes, dans lequel les deux moteurs d'entraînement (3, 4) sont fixes par rapport à une structure de support du dispositif.

14. Procédé d'opération du dispositif selon l'une des revendications précédentes, dans lequel le nombre de tours du au moins un moteur d'entraînement à vitesse variable (3, 4) est modifié en continu de telle sorte qu'il en résulte un mouvement intermittent d'avance et de recul de l'outil (2) le long de l'axe de rotation (X) .
